**Europäisches Patentamt**

**European Patent Office**

**Office européen des brevets**

(19)

(11) Numéro de publication : **0 398 804 B1**

(12)

# FASCICULE DE BREVET EUROPEEN

(45) Date de publication du fascicule du brevet :
**03.02.93 Bulletin 93/05**

(51) Int. Cl.⁵ : **B60G 17/033,** B60G 21/06

(21) Numéro de dépôt : **90401303.4**

(22) Date de dépôt : **16.05.90**

(54) **Dispositif de suspension semi-active et véhicule automobile équipé de ce dispositif.**

(30) Priorité : **18.05.89 FR 8906489**

(43) Date de publication de la demande :
**22.11.90 Bulletin 90/47**

(45) Mention de la délivrance du brevet :
**03.02.93 Bulletin 93/05**

(84) Etats contractants désignés :
**DE GB IT**

(56) Documents cités :
**EP-A- 0 035 330**
**BE-A- 527 054**
**DE-C- 930 067**
**FR-A- 2 625 711**
**FR-E- 79 501**
**GB-A- 844 145**
**US-A- 2 984 501**

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Lachaize, Henri**
**13 avenue Paul Langevin**
**F-92230 Fontenay-Aux-Roses (FR)**

(74) Mandataire : **Berger, Helmut et al**
**Cabinet Z. WEINSTEIN 20, avenue de
Friedland**
**F-75008 Paris (FR)**

## Description

La présente invention a essentiellement pour objet un dispositif de suspension semi-active pour véhicule automobile.

Elle vise également un véhicule d'un type quelconque équipé de ce dispositif.

On connaît déjà un dispositif de suspension semi-active pour véhicule automobile, comprenant essentiellement un vérin hydraulique associé à chacune des roues du véhicule et interposé entre un bras de roue et la caisse du véhicule. Un tel dispositif correspondant au préambule de la revendication 1 est décrit dans EP-A-0 035 330. Un autre dispositif de suspension hydropneumatique semi-active est décrit dans la demande de brevet européen EP-A-0 328 840 revendiquant une priorité du 12 janvier 1988, publiée le 23 août 1989 et appartenant aux demanderesses.

Dans ce dispositif, les deux roues de l'essieu avant et l'une des roues de l'essieu arrière sont respectivement équipées d'un correcteur de hauteur indépendant relié à une source de pression, à une bâche et au vérin hydraulique associé à chacune de ces trois roues, tandis que la quatrième roue est équipée d'un distributeur à tiroir commandé par les pressions des quatre vérins hydrauliques de la suspension.

Enfin, dans ce dispositif, chaque vérin hydraulique associé aux roues était relié à un accumulateur hydropneumatique à membrane.

Ce dispositif, de par notamment la présence des accumulateurs de suspension reliés au vérin de chaque roue, procure au véhicule une suspension, qui, malgré ses nombreux avantages peut ne pas satisfaire tous les utilisateurs.

Aussi, la présente invention a pour but de proposer en alternative, une suspension hydromécanique semi-active présentant les avantages des suspensions à ressorts solides.

A cet effet, l'invention a pour objet un dispositif de suspension semi-active pour véhicule automobile et du type selon la revendication 1.

Suivant une caractéristique préférée de ce dispositif, le corps de chaque vérin hydraulique précité est fixé sur la caisse, tandis que l'une des extrémités du moyen mécanique ou ressort précité est coiffée par le piston, et l'autre extrémité est attelée au bras de roue précité, ou bien inversement, le corps de vérin est attelé au bras de roue et le moyen mécanique ou ressort est solidaire par l'une de ses extrémités de la caisse du véhicule.

Ce dispositif est préférablement encore caractérisé par au moins un amortisseur hydraulique associé à chaque ressort à boudin, soit en étant incorporé à ce ressort, soit en étant monté en parallèle entre le bras de roue et la caisse.

On précisera encore ici que chaque correcteur de hauteur précité est préférablement directement relié à la chambre de chaque vérin ou cale hydraulique qui lui est associé.

Selon une autre caractéristique préférée de ce dispositif, le distributeur comporte quatre arrivées de pression reliées respectivement et directement à la chambre des quatre vérins ou cales hydrauliques, interposée entre la caisse et les ressorts précités.

Selon une variante, on peut utiliser à la place des ressorts à boudin, des ressorts à lame montés entre le piston du vérin hydraulique associé à chaque roue et la caisse du véhicule.

On comprend donc déjà que les moyens élastiques solides et de préférence métalliques constitués par les ressorts à boudin ou à lame réagiront instantanément pour absorber les chocs ou vibrations transmises à la suspension lorsque le véhicule franchit par exemple des petits obstacles sur une route, lesdits ressorts prenant alors appui sur le volume de fluide hydraulique contenu dans le vérin et qui joue le rôle d'une cale hydraulique, étant entendu qu'il s'agit d'une cale hydraulique à volume variable par le fait qu'elle compensera les débattements ou déplacements verticaux des éléments de la suspension lorsque ceux-ci seront sollicités de façon durable en détente ou en compression, par exemple lorsque le véhicule devra subir un virage, un tangage, un roulis, une accélération ou un freinage, ou encore lorsque le véhicule sera notablement chargé.

En d'autres termes, le dispositif de suspension hydromécanique selon cette invention pourra efficacement prendre en compte et absorber tous les mouvements ou débattements de la suspension en fonction de la situation de roulage du véhicule.

Mais d'autres avantages et caractéristiques de l'invention apparaîtront mieux dans la description détaillée qui suit et se réfère aux dessins annexés donnés uniquement à titre d'exemple, et dans lesquels :

- la figure 1 est une vue très schématique et en perspective du dispositif de suspension selon cette invention ; et

- la figure 2 est une vue en coupe d'un distributeur à tiroir associé à l'une des roues du véhicule et commandé par les pressions des quatre vérins ou cales hydrauliques associés respectivement aux quatre roues.

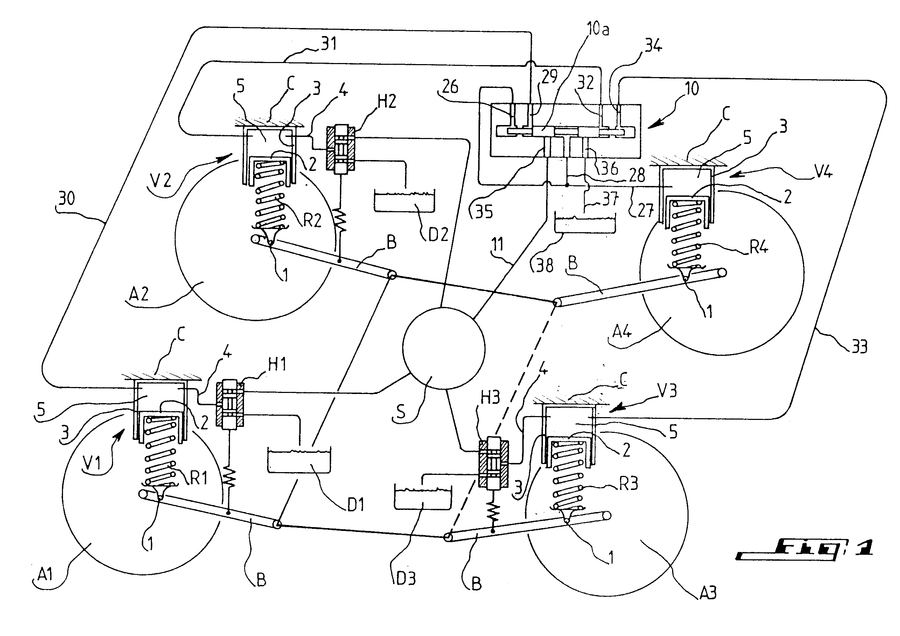

En se reportant à la figure 1, on voit les quatre roues d'un véhicule, à savoir la roue avant gauche $A_1$, la roue avant droite $A_2$, la roue arrière gauche $A_3$ et la roue arrière droite $A_4$, ainsi que quatre vérins formant cales hydrauliques associés aux quatre roues et repérés respectivement $V_1$, $V_2$, $V_3$ et $V_4$. .

Les vérins ou cales hydrauliques sont, d'une manière générale, interposés entre un bras de roue B et la caisse C du véhicule.

Suivant l'exemple de réalisation représenté, les deux roues avant $A_1$, $A_2$ ainsi que la roue arrière gauche $A_3$ sont chacune équipées d'un correcteur de hauteur repéré respectivement en $H_1$, $H_2$ et $H_3$, ces trois correcteurs de hauteur étant aptes à modifier le volume d'huile du vérin correspondant en fonction des débattements des roues de façon à maintenir la caisse à hauteur constante par rapport au sol.

Comme on le voit bien sur la figure 1, chaque correcteur de hauteur indépendant $H_1$, $H_2$ et $H_3$ est relié à une source de pression S, à une bâche $D_1$, $D_2$ et $D_3$, et au vérin ou cale hydraulique à laquelle il est associé.

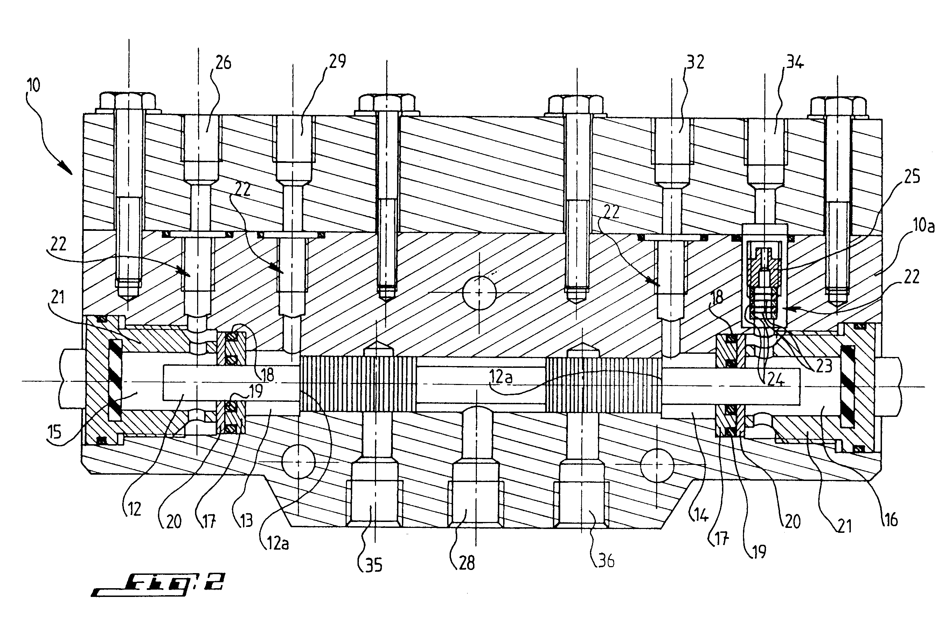

La quatrième roue $A_4$ du véhicule est équipée d'un distributeur à tiroir 10, bien visible sur la figure 2, qui est commandé par les pressions des quatre cales hydrauliques $V_1$, $V_2$, $V_3$ et $V_4$ et qui est hydrauliquement relié au vérin $V_4$ de la roue $A_4$. Ce distributeur est agencé de telle sorte que la différence des efforts au sol des deux roues d'un essieu soit proportionnelle à la différence des efforts au sol des deux roues de l'autre essieu.

Conformément à une caractéristique essentielle de l'invention, un moyen mécanique et élastique et de préférence métallique, $R_1$, $R_2$, $R_3$, $R_4$ est intégré aux quatre vérins ou cales hydrauliques $V_1$, $V_2$, $V_3$ et $V_4$ respectivement.

Plus précisément, l'une des extrémités de chaque ressort $R_1$, $R_2$, $R_3$ et $R_4$, comme on le voit bien sur la figure 1, est attelée à un bras de suspension B, comme montré en 1, tandis que l'autre extrémité de chaque ressort est coiffée par un élément formant piston 2 monté coulissant dans le corps 3 des vérins $V_1$, $V_2$, $V_3$, $V_4$, lequel corps 3 est fixé sur la caisse C. On remarquera ici que le moyen élastique peut être constitué par un ressort à lame monté entre le piston du vérin et la caisse, la lame jouant alors le rôle de bras.

Chaque correcteur de hauteur $H_1$, $H_2$, $H_3$ est directement relié par une conduite 4 à la chambre 5 de son vérin hydraulique associé $V_1$, $V_2$, $V_3$.

La chambre 5 des vérins $V_1$, $V_2$, $V_3$ et $V_4$ contient évidemment un certain volume de fluide hydraulique qui est variable et qui joue le rôle d'une cale vis-à-vis du ressort $R_1$, $R_2$, $R_3$, $R_4$, comme on l'expliquera plus loin, cette cale étant interposée entre la caisse C et ledit ressort.

A chaque ressort est associé un amortisseur hydraulique qui n'est pas représenté sur la figure 1. Cet amortisseur hydraulique peut être incorporé à chaque ressort $R_1$, $R_2$, $R_3$ et $R_4$, ou bien monté en parallèle entre un bras de roue B et la caisse C.

On comprend donc de ce qui précède que les vibrations ou débattements impartis aux bras B de la suspension lorsque le véhicule roule sur une route en mauvais état, seront instantanément absorbés par les ressorts $R_1$, $R_2$, $R_3$ et $R_4$ qui prennent appui par l'intermediaire de l'élément 2 contre la cale hydraulique constituée par le volume de fluide hydraulique contenu dans la chambre 5 des vérins $V_1$, $V_2$, $V_3$ et $V_4$.

Mais, comme expliqué précédemment, ces vérins constituent des cales hydrauliques à volume variable toutes reliées au distributeur 10 qui est relié à la source S par une conduite 11 et qui sera décrit maintenant en détail en se reportant à la figure 2.

Ce distributeur 10 est formé d'un corps 10a dans lequel coulisse un tiroir 12 qui est monté de telle façon qu'un accroissement de la pression de la cale hydraulique à laquelle il est associé, le déplace dans le sens d'un retour à l'équilibre.

Le tiroir 12 comporte deux extrémités symétriques définissant chacune une chambre annulaire 13, 14 et une chambre extrême 15, 16. Chaque chambre annulaire 13, 14 est séparée de la chambre extrême 15, 16 par une cloison étanche 17 munie de joints statiques 18 et de joints dynamiques 19, l'ensemble étant maintenu par des rondelles 20 et plaqué par des boulons 21.

Les quatre arrivées de pression 26, 29, 32, 34 au distributeur 10 sont freinées par des amortisseurs 22 (dont un seul est représenté sur la figure 2) se composant d'un empilage de rondelles minces 23 séparées par des entretoises 24, l'ensemble étant serré par une vis 25.

En considérant les figures 1 et 2, on voit que la cale hydraulique $V_4$ associée à la roue arrière droite $A_4$, et plus précisément sa chambre 5, est reliée à l'arrivée de pression 26 du distributeur 10 par une conduite 27 elle-même reliée par un conduit de dérivation 28 au distributeur 10. L'arrivée de pression 26 communique avec la chambre extrême 15.

La cale hydraulique $V_1$ associée à la roue avant gauche $A_1$, et plus précisément sa chambre 5, communique avec l'arrivée de pression 29 dans le distributeur 10 par une conduite 30, ladite arrivée de pression communiquant avec la chambre annulaire 13.

La cale hydraulique $V_2$ associée à la roue avant droite $A_2$ communique par sa chambre 5 via un conduit 31 avec l'arrivée de pression 32 ménagée dans le distributeur 10 et communiquant elle-même avec la chambre annulaire 14. Enfin la cale hydraulique $V_3$ associée à la roue arrière gauche $A_3$ communique par sa chambre 5 via un conduit 33 avec l'arrivée de pression 34 ménagée dans le corps 10a du distributeur 10 et communiquant elle-même avec la chambre extrême 16.

On a encore montré sur la figure 2 un alésage 35 ménagé dans le corps du distributeur 10 et communiquant avec la source de pression S via le conduit 11, et en 36 un autre alésage ménagé dans le corps du distributeur et communiquant via une conduite 37 avec un réservoir formant bâche 38 (voir figure 1).

Comme on le voit bien sur la figure 2, le tiroir 12 comporte à ses deux extrémités des épaulements symétriques 12a définissant de chaque côté d'une part les chambres annulaires 13, 14 reliées aux cales hydrauliques $V_1$, $V_2$, de l'essieu avant, et d'autre part les chambres extrêmes 15, 16 reliées respectivement et diagonalement aux cales hydrauliques $V_4$ et $V_3$ de l'essieu arrière.

On déterminera les sections extrêmes $\sigma$ et intermédiaires $\Sigma$ du tiroir du distributeur 10 ainsi que les sections $S_1$ et $S_2$ des cales des essieux avant et arrière de telle façon que la différence des efforts au sol des roues d'un essieu proportionnelle à la différence des efforts au sol des roues de l'autre essieu, le coefficient de proportionalité étant égal à :

$$\frac{S1}{S2} \times \frac{\sigma}{\Sigma - \sigma}$$

On a donc réalisé suivant l'invention un dispositif de suspension hydromécanique semi-active comportant des cales hydrauliques respectivement associées à chaque roue d'un véhicule et interposées chacune entre la caisse de ce véhicule et un ressort luimême attelé à un bras de roue, de façon à rigidifier quelque peu la suspension qui sera apte à absorber efficacement et en toutes circnstances les sollicitations auxquelles elle sera soumise, les sollicitations brèves et de relativement faible amplitude étant instantanément absorbées par les ressorts en appui contre les cales hydrauliques, et les sollicitations de relativement longue durée et forte amplitude étant absorbées par la variation du volume de fluide dans les cales hydrauliques.

Bien entendu, l'invention n'est nullement limitée au mode de réalisation décrit et illustré qui n'a été donné qu'à titre d'exemple.

C'est ainsi qu'à la place de ressorts à boudin intégrés aux cales hydrauliques, on pourrait parfaitement, sans sortir du cadre de l'invention, imaginer un autre moyen mécanique, par opposition au gaz contenu dans les sphères de suspension de l'art antérieur, qui remplirait la même fonction que les ressorts.

C'est dire que l'invention comprend tous les équivalents techniques des moyens décrits ainsi que leurs combinaisons si celles-ci sont effectuées dans le cadre des revendications.

## Revendications

1. Dispositif de suspension semi-active pour véhicule automobile et du type comprenant un vérin hydraulique ($V_1$, $V_2$, $V_3$, $V_4$) associé à chacune des roues ($A_1$, $A_2$, $A_3$, $A_4$) du véhicule et interposé entre un bras de roue (B) et la caisse (C) du véhicule, et dans lequel les deux roues ($A_1$, $A_2$) d'un essieu, de préférence l'essieu avant, et l'une ($A_3$) des deux roues de l'autre essieu sont respectivement équipées d'un correcteur de hauteur ($H_1$, $H_2$, $H_3$) relié notamment au vérin hydraulique correspondant, caractérisé en ce que la quatrième roue ($A_4$) est équipée d'un distributeur de commande à tiroir (10) sur lequel agissent directement les pressions des quatre vérins hydrauliques ($V_1$, $V_2$, $V_3$, $V_4$) de la suspension, et qui est relié hydrauliquement au vérin ($V_4$) de cette roue, le piston du vérin hydraulique associé à chaque roue comportant une tige constituée par un moyen mécanique et élastique, tel qu'un ressort a boudin ($R_1$, $R_2$, $R_3$, $R_4$) qui encaisse instantanément les débattements relativement brefs de la suspension en prenant appui sur le volume de fluide hydraulique dans le vérin qui se comporte comme une cale hydraulique a volume variable reliée à une source de pression (S) ou à une bâche ($D_1$, $D_2$, $D_3$, 38) par l'intermédiaire des correcteurs de hauteur ($H_1$, $H_2$, $H_3$) ou du distributeur (10).

2. Dispositif selon la revendication 1, caractérisé en ce que le corps (3) de chaque vérin hydraulique précité est solidaire de la caisse (C), tandis que l'une des deux extrémités du moyen mécanique et élastique précité ($R_1$, $R_2$, $R_3$, $R_4$) est coiffée par le piston (2) et l'autre extrémité est attelée au bras de roue précité (B), ou inversement, ledit corps (3) est attelé au bras de roue et ledit moyen mécanique ou ressort est solidaire par l'une de ses extrémités de la caisse (C).

3. Dispositif selon la revendication 1 ou 2, caractérisé en ce que le moyen mécanique et élastique est un ressort à boudin, au moins un amortisseur hydraulique étant associé à chaque ressort à boudin ($R_1$, $R_2$, $R_3$, $R_4$) soit en étant incorporé à ce ressort, soit en étant monté en parallèle entre un bras de roue (B) et la caisse (C).

4. Dispositif selon l'une des revendications 1 à 3, caractérisé en ce que le distributeur précité (10) comporte quatre arrivées de pression (26, 29, 32, 34) reliées respectivement et directement (27, 30, 31, 33) à la chambre (5) des quatre vérins ou cales hydrauliques ($V_1$, $V_2$, $V_3$, $V_4$), interposée entre la caisse (C) et les moyens mécaniques et élastiques précités ($R_1$, $R_2$, $R_3$, $R_4$).

5. Dispositif selon la revendication 1, caractérisé en ce que le moyen mécanique et élastique précité est un ressort à lame monté entre le piston du vérin hydraulique associé à chaque roue et la caisse du véhicule.

6. Véhicule automobile équipé d'un dispositif de suspension selon l'une des revendications 1 à 4.

## Patentansprüche

1. Halbwirkende Aufhängungsvorrichtung für Kraftfahrzeug der einen jedem der Räder ($A_1$, $A_2$, $A_3$, $A_4$) des Fahrzeugs zugeordneten und zwischen einem Radarm (B) und dem Kasten (C) des Fahrzeugs gefügten hydraulischen Kraftzylinder ($V_1$, $V_2$, $V_3$, $V_4$) aufweisenden Gattung und bei wel-

cher die beiden Räder (A$_1$, A$_2$) einer Radachse, vorzugsweise der Vorderradachse und eines (A$_3$) der beiden Räder der anderen Radachse mit einem, insbesondere mit dem entsprechenden hydraulischen Kraftzylinder verbundenen höhen Korrektor (H$_1$, H$_2$, H$_3$) ausgerüstet sind, dadurch gekennzeichnet, dass das vierte Rad (A$_4$) mit einem Steuerschieberverteiler (10) ausgestattet ist, auf welchen die Drücke der vier hydraulischen Kraftzylinder (V$_1$, V$_2$, V$_3$, V$_4$) der Aufhängung unmittelbar wirken und der mit dem Kraftzylinder (V$_4$) dieses Rades hydraulisch verbunden ist, wobei der Kolben des jedem Rad zugeordneten hydraulischen Kraftzylinders eine durch ein mechanisches und elastisches Mittel, wie eine Schraubenfeder (R$_1$, R$_2$, R$_3$, R$_4$) gebildete Stange aufweist, die sofort die verhältnismässig kurzen Ausschläge der Aufhängung aufnimmt, indem sie sich an dem hydraulischen Fluidvolumen indem Kraftzylinder abstützt, welches sich wie eine mit einer Druckquelle (S) oder einem Behälter (D$_1$, D$_2$, D$_3$, 38) über Höhenkorrektore (H$_1$, H$_2$, H$_3$) oder den Verteiler (10) verbundene hydraulische Beilage mit veränderlichem Volumen verhält.

2. Vorrichtung nach Anspruch 1, dadurch gekennzeichnet, dass der Körper (3) jedes vorgenannten hydraulischen Kraftzylinders mit dem Kasten (C) fest verbunden ist, während das eine der beiden Enden des vorgenannten mechanischen und elastischen Mittels (R$_1$, R$_2$, R$_3$, R$_4$) durch den Kolben (2) überdeckt und das andere Ende an dem vorgenannten Radarm (D) angekoppelt ist oder umgekehrt, der besagte Körpe (3) an dem Radarm angekoppelt ist und das besagte mechanische Mittel bzw. die Feder durch eines ihrer Enden mit dem Kasten (C) fest verbunden ist.

3. Vorrichtung nach Anspruch 1 oder 2, dadurch gekennzeichnet, dass das mechanische und elastische Mittel eine Schraubenfeder ist, wobei wenigstens ein hydraulischer Stossdämpfer jeder Schraubenfeder (R$_1$, R$_2$, R$_3$, R$_4$) zugeordnet ist, indem er entweder in diese Feder eingesetzt oder in Parallelweise zwischen einem Radarm (B) und dem Kasten (C) angeordnet ist.

4. Vorrichtung nach einem der Ansprüche 1 bis 3, dadurch gekennzeichnet, dass der vorgenannte Verteiler (10) vier jeweils unmittelbar (27, 30, 31, 33) mit der zwischen dem Kasten (C) und den vorgenannten mechanischen und elastischen Mitteln (R$_1$, R$_2$, R$_3$, R$_4$) gefügten Kammer (5) der vier hydraulischen Kraftzylinder bzw. Beilagen (V$_1$, V$_2$, V$_3$, V$_4$) verbundene Druckzufuhren (26, 29, 32? 34) aufweist.

5. Vorrichtung nach Anspruch 1, dadurch gekennzeichnet, dass das vorgenannte mechanische und elastische Mittel eine zwischen dem Kolben des jedem Rad zugeordneten hydraulischen Kraftzylinders und dem Kasten des Fahrzeugs angeordnete Blattfeder ist.

6. Mit einer Aufhängungsvorrichtung nach einem der Ansprüche 1 bis 4 ausgerüstetes Kraftfahrzeug.

**Claims**

1. Semi-active suspension device for an automotive vehicle and of the type comprising a hydraulic jack (V$_1$, V$_2$, V$_3$, V$_4$) associated with each one of the wheels (A$_1$, A$_2$, A$_3$, A$_4$) of the vehicle and interposed between a wheel arm (B) and the body (C) of the vehicle and wherein both wheels (A$_1$, A$_2$) of an axle, preferably the front axle and one (A$_3$) of the two wheels of the other axle are fitted respectively with a height corrector (H$_1$, H$_2$, H$_3$) connected in particular to the corresponding hydraulic jack, characterized in that the fourth wheel (A$_4$) is fitted with a spool-carrying control distributor (10) upon which are directly acting the pressures of the four hydraulic jacks (V$_1$, V$_2$, V$_3$, V$_4$) of the suspension and which is hydraulically connected to the jack (V$_4$) of this wheel, the piston of the hydraulic jack associated with each wheel comprising a rod constituted by a mechanical and elastic means such as a coil spring (R$_1$, R$_2$, R$_3$, R$_4$) which instantaneously takes the relatively short deflecting motions of the suspension while bearing upon the volume of hydraulic fluid within the jack which behaves like a hydraulic chock with a variable volume connected to a source of pressure (S) or to a tank (D$_1$, D$_2$, $_3$, 38) through the medium of height correctors (H$_1$, H$_2$, H$_3$) or of the distributor (10).

2. Device according to claim 1, characterized in that the body (3) of each aforesaid hydraulic jack is made fast to the body (C) whereas one of the two ends of the aforesaid mechanical and elastic means (R$_1$, R$_2$, R$_3$, R$_4$) is capped by the piston (2) and the other end is coupled to the aforesaid wheel arm (B) or reversely, the said body (3) is coupled to the wheel arm and the said mechanical means or spring is made fast with one of its ends to the body (C).

3. Device according to claim 1 or 2, characterized in that the mechanical and elastic means is a coil spring, at least one hydraulic damper being associated with each coil spring (R$_1$, R$_2$, R$_3$, R$_4$) either by being incorporated into this spring or by being mounted in parallel relationship between one wheel arm (B) and the body (C).

4. Device according to one of claims 1 to 3, characterized in that the aforesaid distributor (10) comprises four pressure inputs (26, 29, 32, 34) connected respectively and directly (27, 30, 31, 33) to the chamber (5) of the four jacks or hydraulic chocks ($V_1$, $V_2$, $V_3$, $V_4$) interposed between the body (C) and the aforesaid mechanical and elastic means ($R_1$, $R_2$, $R_3$, $R_4$).

5. Device according to claim 1, characterized in that the aforesaid mechanical and elastic means is a leaf spring mounted between the piston of the hydraulic jack associated with each wheel and the body of the vehicle.

6. Automotive vehicle fitted with a suspension device according to one of claims 1 to 4.

Fig. 1

Fig.2